# EUROPÄISCHE PATENTSCHRIFT

(11) **EP 2 458 246 B1**
(45) Veröffentlichungstag und Bekanntmachung des Hinweises auf die Patenterteilung: **02.10.2013**
(21) Anmeldenummer: 10015104.2
(22) Anmeldetag: 29.11.2010
(51) Int. Cl.: F16H 7/08

(54) **Spannvorrichtung mit Dämpfungseinrichtung, die ein Mindestaufnahmevolumen aufweist**
Tensioning device with dampening unit comprising a minimum uptake volume
Dispositif de serrage doté d'un dispositif d'évaporation comprenant un volume de réception minimal

(43) Veröffentlichungstag der Anmeldung: 30.05.2012
(73) Patentinhaber: iwis motorsysteme GmbH & Co. KG, 81369 München (DE)
(72) Erfinder: Perissinotto, Renzo, 85221 Dachau (DE); Englbrecht, Thomas, 85570 Markt Schwaben (DE); Schmid, Tobias, 86875 Bronnen (DE); Schelzig, Ulrich, 81271 München (DE)
(74) Vertreter: Grünecker, Kinkeldey, Stockmair & Schwanhäusser

(56) Entgegenhaltungen:
- EP-A2- 1 106 789
- DE-A1- 3 741 860
- DE-C1- 4 015 708
- DE-C1- 4 035 823

## Beschreibung

Die vorliegende Erfindung betrifft eine Spannvorrichtung für ein flexibles Antriebsmittel wie Kette oder Riemen, mit einem Gehäuse, einem im Gehäuse verschiebbar angeordneten, mit einem Hohlraum versehenen Spannkolben, einer zwischen Gehäuse und Spannkolben gebildeten Druckkammer für Hydraulikfluid, einer im Spannkolben angeordneten Entlüftungsöffnung und einer einerseits mit der Entlüftungsöffnung und andererseits mit der Druckkammer in Strömungsverbindung stehenden Dämpfungseinrichtung.

So eine Spannvorrichtung ist aus der gattungsgemäße DE 4 035 823 C bekannt.

Eine andere Spannvorrichtung ist aus der DE 19631607 A1 bekannt. Der in dieser Druckschrift beschriebene Einschraubkettenspanner weist gemäß einer Ausführungsform ein Einschraubgehäuse mit einem eingesetzten Rohr auf, in dem ein Hohlkolben längsbeweglich geführt ist. Das Rohr ist mit einem Boden versehen, in dem ein Rückschlagventil angeordnet ist. Das Rohr und der Kolben begrenzen einen Druckraum für Hydraulikflüssigkeit, insbesondere Motoröl. Am vorderen Ende des Kolbens ist eine Dämpfungseinrichtung angeordnet. Die Dämpfungseinrichtung weist eine Rolle auf, die koaxial zu dem Kolben angeordnet ist. In dem Bereich der Rolle ist das Kolbeninnere als Aufnahme für die Rolle ausgebildet. Die Aufnahmewandung und die Mantelfläche der Rolle begrenzen dabei einen Leckspalt. Die Innenwandung des Kolbens ist mit einer den Kolbenboden axial benachbarten Ringnut versehen, die mit einer in dem Kolbenboden vorgesehenen Entlüftungsöffnung korrespondiert. Der Leckspalt beeinflusst die Dämpfung maßgeblich. Das bedeutet, dass zwischen dem Kolben und dem Rohr zwar ein weiterer Leckspalt ausgebildet ist, der jedoch so eng gewählt ist, dass er einen vernachlässigbaren Dämpfungseinfluss darstellt und die Dämpfung maßgeblich durch den Leckspalt zwischen der Rolle und dem Kolben bestimmt ist.

Solche Dämpfungseinrichtungen im Inneren des Kolbens sind eher die Ausnahme, da die Dämpfung bei den meisten Spannvorrichtungen, insbesondere Kettenspannern, mittels eines Leckspalts zwischen dem Kolben und dem Gehäuse bzw. dem Gehäuserohr gebildet wird und im Inneren des Kolbens eine mit einer Entlüftungsöffnung im Kolben in Verbindung stehende Entlüftungseinrichtung vorgesehen ist. Ein Bestandteil derartiger Entlüftungseinrichtungen ist oftmals ein Füllkörper, der in vielen Fällen eine Pilzform aufweist. Dieser Füllkörper wird mittels einer im Inneren der Druckkammer angeordneten Druckfeder gegen die Endseite des Hohlraums im Spannkolben gedrückt. Je nach Ausführung kann Luft nur über einen Spalt im Füllkörper zur Entlüftungsöffnung entweichen. Der Füllkörper dient hauptsächlich auch dazu, das Volumen der Druckkammer zu reduzieren, so dass zum vollständigen Befüllen, z.B. beim Start eines Verbrennungsmotors nur eine geringe Ölmenge zur vollständigen Befüllung der Druckkammer erforderlich ist.

Spannvorrichtungen mit derartigen Dämpfungseinrichtungen sind meist am Motorölkreislauf angeschlossen und verfügen naturgemäß über eine bestimmte Leckage während des Betriebs, so dass ständig über das Rückschlagventil die verlorene Ölmenge nachgefüllt werden muss. Die hierbei umzusetzende Ölmenge ist auch bei der Auslegung und Bestimmung der Leistung der Ölpumpe zu berücksichtigen.

Es ist daher die Aufgabe der vorliegenden Erfindung, eine Spannvorrichtung der eingangs genannten Art bereitzustellen, die im Betrieb mit einem geringeren Öldurchsatz auskommt.

Bei einer gattungsgemäßen Spannvorrichtung ist hierzu vorgesehen, dass in dem Hohlraum des Spannkolbens und somit in der Druckkammer ein Füllkörper angeordnet ist, der zumindest Bestandteil der Dämpfungseinrichtung derart ist, dass die Dämpfungseinrichtung ein Aufnahmevolumen für Hydraulikfluid aufweist, das mindestens 30 % des bei einem 1 mm-Hub des Spannkolbens in Ausfahrrichtung hinzukommenden Volumens der Druckkammer entspricht.

Insbesondere bei einem Einsatz in einem Steuertrieb eines Verbrennungsmotors sind derartige Spannvorrichtungen hohen dynamischen Belastungen ausgesetzt. Der Kolben macht demnach ständig kleinere Einfahr- und Ausfahrbewegungen, die zum einen eine Dämpfung durch gedrosseltes Herausleiten von Öl aus der Druckkammer und zum anderen ein schnelles Nachfüllen von Öl in die Druckkammer erfordern. Sofern zum Nachfüllen des Druckraums ein Rückschlagventil eingesetzt wird, so sind bei derartigen hochdynamischen Bewegungsvorgängen natürlich auch die Schaltzeiten des Rückschlagventils mit zu berücksichtigen. Die erfindungsgemäße Ausgestaltung der Spannvorrichtung sieht nunmehr vor, das zumindest ein Teil des Hydraulikfluids nicht mehr über die Hauptzuströmung, z.B. ein Rückschlagventil, erfolgen muss, sondern die den Füllkörper umfassende Dämpfungseinrichtung selbst ein Reservoir für das Rückströmen von Hydraulikfluid in die Druckkammer bereitstellt. Idealisiert lässt sich das so vorstellen, dass in der Dämpfungseinrichtung das Flüssigkeitsniveau möglichst im Rhythmus der Aus- und Einfahrbewegungen des Spannkolbens schwankt. Die Auslegung soll bevorzugt derart erfolgen, dass zumindest bei den üblichen Betriebszuständen möglichst wenig bzw. gar kein Hydraulikfluid über die Entlüftungsöffnung entweicht, sondern das Hydraulikfluid in der Dämpfungseinrichtung entsprechend hin- und herpendelt. Nachdem die Dämpfungseinrichtung im Inneren des Spannkolbens unter Verwendung des Füllkörpers erfolgt, ergeben sich wesentliche Vorteile. Die Spaltabstimmung zwischen Spannkolben und Gehäuse kann standardisiert werden, weil dieser Spalt für die Dämpfung keine oder nur noch eine untergeordnete Rolle spielt. Für die Erfindung soll es ausreichend sein, dass die erfindungsgemäße Dämpfungseinrichtung im Inneren des Spannkolbens zu mehr als 50 % Anteil an der Gesamtdämpfung des Spannkolbens haben soll, bevorzugt sind mehr als 80 % und weiter bevorzugt mehr als 95 %. Bevorzugt wird also zwischen dem Spannkolben und dem Gehäuse eine wirtschaftlich sinnvolle Spielpassung verwendet, die aber eine hinreichende Abdichtung hinsichtlich eines Leckagestroms bereitstellt. Ein Vorteil besteht auch darin, dass bei einer solchen engeren Passung eine kürzere Führungslänge zwischen Spannkolben und Gehäuse verwendet werden kann. Ein wesentlicher Vorteil der Erfindung ist darin zu sehen, dass das benötigte Hydraulikfluidvolumen verringert wird, da die für die Dämpfung benötigte Fluidmenge zumindest zum Teil innerhalb der Spannvorrichtung zur Verfügung steht. Dieser geringere Hydraulikfluidverbrauch beseitigt auch die Probleme bei Unterversorgung. Eine Standardisierung von Fertigungsmaßen von Kolben und Gehäuse (insbesondere Kolbenaußendurchmesser und Gehäusebohrungsdurchmesser) lässt derartige standardisierte Kolbengehäuse für vielfältigere Einsatzzwecke zu, da die Dämpfungsabstimmung dann maßgeblich über die Verwendung unterschiedlicher Füllkörper erfolgen kann.

Zu unterscheiden sind die erfindungsgemäßen Maßnahmen von reinen Entlüftungseinrichtungen, die im Inneren des Spannkolbens angeordnet sind, wohingegen die Dämpfung aber immer noch durch die Leckspaltabstimmung zwischen Kolben und Gehäuse erfolgt. Bei der Erfindung erfolgt bevorzugt Entlüftung und Dämpfung über ein und dieselbe Einrichtung, nämlich die Dämpfungseinrichtung. Zur Dämpfungseinrichtung zählen nur diese Bestandteile, die aktiv an der Dämpfung teilhaben oder teilhaben können. Sofern Strömungskanalbestandteile ungedrosselt mit der Entlüftungsöffnung in Verbindung stehen, kann deren Volumen nicht mehr dem Aufnahmevolumen der Dämpfungseinrichtung zugerechnet werden. Im Stand der Technik sind auch zwischen der Entlüftungsöffnung und dem Druckraum angeordnete Überdruckeinrichtungen bekannt. Da diese aber in aller Regel ein Ventil aufweisen, das beim Nachlassen des Drucks in der Druckkammer wieder schließt, kann auch kein Hydraulikfluid aus diesen Kammern in den Druckraum zurückfließen. Darüber hinaus steht der dem Ventil nachgeschaltete Raum ungedrosselt mit der Entlüftungsöffnung in Strömungsverbindung.

Bei einer vorteilhaften Ausgestaltung kann vorgesehen sein, dass zumindest als Bestandteil der Dämpfungseinrichtung zwischen dem Spannkolben und dem Füllkörper und/oder im Füllkörper mindestens ein Drosselkanal gebildet ist, der zum einen mit der Druckkammer und zum anderen mit der Entlüftungsöffnung in Strömungsverbindung steht. Die Drosselung erfolgt dann über einen genau abgestimmten bzw. abstimmbaren Drosselkanal. Eine Möglichkeit zur Herstellung eines derartigen Drosselkanals besteht in der Verwendung eines spritzgegossenen Füllkörpers. Sofern der Drosselkanal vollständig in dem Füllkörper angeordnet ist, kann auch die Innenseite des Spannkolbens standardisiert ausgeführt werden. Es besteht aber auch die Möglichkeit eines mehrteiligen Aufbaus des Füllkörpers (z.B. zwei miteinander verbundene und ineinander gesteckte Hülsen, zwischen denen der Kanal ausgestaltet ist). Günstigerweise dürfte jedoch der Drosselkanal in die Außenmantelfläche des Füllkörpers eingeformt sein, so dass dann beim passgenauen Einstecken in den Spannkolben ein geschlossenes Kanalprofil entsteht.

Bei einer weiteren vorteilhaften Ausgestaltung kann vorgesehen sein, dass zumindest als Bestandteil der Dämpfungseinrichtung zwischen dem Spannkolben und dem Füllkörper und/oder in dem Füllkörper mindestens eine den Strömungsquerschnitt des Drosselkanals zumindest bereichsweise vergrößernde Speicherkammer gebildet ist. Nach der Speicherkammer geht in aller Regel der Drosselkanal weiter, so dass die Speicherkammer als Bestandteil der Dämpfungseinrichtung zu sehen ist. Diese Speicherkammer oder diese mehreren Speicherkammern stellen selbst bei ausreichender Dämpfung über den Drosselkanal ein ausreichendes Hydraulikfluidvolumen bereit, so dass auch die Wahrscheinlichkeit, Hydraulikfluid über die Entlüftungsöffnung zu verlieren, nochmals reduziert ist.

Darüber hinaus kann der Füllkörper mit seiner Querschnittsaußenkontur an die Querschnittsinnenkontur des Hohlraums im Spannkolben angepasst sein, in diesen im Wesentlichen passgenau eingesetzt sein und über einen Längsbereich mit seinem Umfang in Dichtkontakt mit der Seitenwand des Hohlraums derart stehen, dass zumindest in einem Längenbereich als Strömungsquerschnitt für die Dämpfungseinrichtung weitgehend nur der Strömungsquerschnitt des Drosselkanals zur Verfügung steht. Das Ein- und Ausflie-βen von Hydraulikfluid aus und in die Dämpfungseinrichtung heraus bzw. hinein erfolgt also ausschließlich über den Drosselkanal. Nachfolgend dieses Längenbereichs kann die Passung zwischen dem Füllkörper und dem Spannkolben weniger stramm oder sogar mit vorbestimmten Spiel versehen sein; je nachdem wie es die Abstimmung der Dämpfungseinrichtung und die Erzielung eines ausreichenden Aufnahmevolumens erfordert. Hierbei ist auch zu berücksichtigen, dass, sobald ein ausreichender Druckaufbau in der Druckkammer stattgefunden hat, der meist hohle Füllkörper auch dem Hydraulikfluiddruck ausgesetzt ist und im Wesentlichen über seine gesamte Länge an die Innenwandung des Spannkolbens angedrückt wird. Der Dichtkontakt in dem besagten Längenbereich dient dann hauptsächlich der Funktionserhaltung, bevor sich der Druck in der Druckkammer ausreichend aufgebaut hat.

Eine Fixierung des Füllkörpers im Inneren des Spannkolbens kann auch dadurch erfolgen, dass im Druckraum eine in Achsrichtung des Spannkolbens wirkende Druckfeder angeordnet ist, die sich einerseits zumindest mittelbar am Gehäuse und andererseits zumindest mittelbar am Füllkörper abstützt. Hierdurch wird auch bei drucklosem Druckraum eine bestimmte Vorspannung mittels der Feder unter Zwischenschaltung des Füllkörpers auf den Spannkolben übertragen und somit auch der Füllkörper in Position gehalten.

Um in der Länge möglichst kurz bauen zu können, kann der Füllkörper hülsenförmig ausgestaltet sein. Hierdurch besteht z.B. die Möglichkeit, die Druckfeder im Inneren des Füllkörpers anzuordnen und gleichzeitig eine ausreichende Länge zur Bereitstellung der Dämpfungsfunktion zu erzielen.

Darüber hinaus kann der Füllkörper innen einen dornförmigen Fortsatz aufweisen, der sich zur Reduzierung des Volumens des Druckraums in das Innere Druckfeder erstreckt. Dieser dornförmige Fortsatz lässt die Funktionsweise der Druckfeder unberührt; reduziert jedoch auch das Volumen im Inneren der Druckfeder, so dass sich insbesondere bei einer anfänglichen Befüllung des Druckraums mit Hydraulikfluid die Zeit für diese Füllung möglichst weit reduzieren lässt.

Eine weitere vorteilhafte Ausgestaltung sieht vor, dass der Füllkörper einen die Hülsenform im Wesentlichen verschließenden Kopf aufweist, der zumindest mittelbar gegen eine Endwand des Hohlraums im Spannkolben gedrückt ist. Hierdurch besteht die Möglichkeit, ähnlich wie bei bereits bekannten Füllkörpern, die auch gegen die Endwand des Hohlraums im Spannkolben gedrückt sind, geeignete, der Entlüftung zuträgliche, Ausgestaltungen zu verwenden. Diese Ausgestaltungen schließen sich dann in aller Regel an die eigentliche Dämpfungsausgestaltung des Füllkörpers an. Es besteht prinzipiell aber auch die Möglichkeit, den Kopf des Füllkörpers in die Dämpfungsfunktion mit einzubeziehen.

Bevorzugt kann der Kopf des Füllkörpers alleine und/oder im Zusammenspiel mit der Endwand des Hohlraums eine Fluidverbindung zwischen dem Drosselkanal und der Entlüftungsöffnung bereitstellen. Durch den Drosselkanal entweichende Luft strömt dann in diese Fluidverbindung ein und kann anschließend durch die Entlüftungsöffnung entweichen. Diese Fluidverbindung dient in aller Regel zum Entspannen und anschließend ungedrosseltem Weiterleiten dieser Luft.

Eine besonders einfache Ausgestaltungsvariante sieht vor, dass der Drosselkanal wendelförmig zwischen dem Spannkolben und dem Füllkörper und/oder im Füllkörper umläuft. Hierdurch wird eine möglichst große Länge des Drosselkanals bei vernünftiger gegebener Länge des Füllkörpers erzielt. Darüber hinaus kann durch geschicktes Wählen der Steigung der Kanalwendel eine Dämpfungsabstimmung erfolgen. Ansonsten baugleiche Füllkörper können dann bei Verwendung von unterschiedlichen Wendelsteigungen unterschiedliche Dämpfungseigenschaften herbeiführen.

Eine einfache Variante sieht vor, das die Fluidverbindung einen zwischen der Endwand des Hohlraums und dem Kopf des Füllkörpers und/oder im Füllkörper angeordneten Ringkanal umfasst. Ein solcher Ringkanal sorgt für eine Entspannung der aus dem Drosselkanal ausströmenden Luft und gegebenenfalls des ausströmenden Hydraulikfluids.

Bevorzugt kann die Entlüftungsöffnung als zentrale, im Spannkolbenkopf angeordnete Bohrung ausgeführt sein und die Fluidverbindung mindestens einen zwischen der Endwandung des Hohlraums und dem Kopf des Füllkörpers und/oder im Kopf des Füllkörpers angeordneten Abströmkanal umfassen, der den Ringkanal mit der zentralen Entlüftungsöffnung verbindet. Hierdurch kann eine elegante Überbrückung zwischen einem am Umfang des Füllkörpers angeordneten Drosselkanal und der zentralen Entlüftungsöffnung erzielt werden.

Des Weiteren bezieht sich die Erfindung auf eine Spannvorrichtungsserie, umfassend mindestens eine erste und mindestens eine zweite Spannvorrichtung nach einem der Ansprüche 1 bis 12, wobei die erste und die zweite Spannvorrichtung eine Gehäusebohrung zur Aufnahme des Spannkolbens und einen Spannkolben von jeweils im Durchmesser standardisierter gleicher Größe aufweisen und sich die Dämpfungseinrichtung der mindestens einen ersten Spannvorrichtung von der Dämpfungseinrichtung der mindestens einen zweiten Spannvorrichtung in der Dämpfungscharakteristik unterscheidet, wobei die unterschiedliche Dämpfungscharakteristiken mittels unterschiedlich bemaßter oder ausgestalteter Füllkörper erhalten sind.

Im günstigsten Fall kann eine solche Spannvorrichtungsserie dazu führen, dass die Gehäuse und die Spannkolben entsprechend identisch ausgestaltet sind, während hauptsächlich ein anderer Füllkörper für die jeweils gewünschte Dämpfungscharakteristik eingesetzt wird. Dies kann soweit geführt werden, dass bis auf den Füllkörper sämtliche anderen Bestandteile der ersten und zweiten Spannvorrichtung identisch sind. Hierdurch lassen sich erhebliche Kosten einsparen, obwohl die Dämpfung an individuell unterschiedliche Einsatzerwartungen angepasst werden kann. Insbesondere im Einsatz bei Steuerkettentrieben von Verbrennungsmotoren lässt sich durch den Austausch des Füllkörpers eine Dämpfungsanpassung herbeiführen. Eine solche Maßnahme stellt einen entscheidenden Vorteil bei dem auf diesem Gebiet üblich vorliegenden Kostendruck dar. Zusätzlich weist der Füllkörper dieser Spannvorrichtung die von der erfindungsgemäßen Konstruktion zu erwartenden geringeren Hydraulikverluste auf. Selbstverständlich kann die Serie beliebig weitergeführt werden, so dass auch mehr als zwei Spannvorrichtungen mit unterschiedlicher Dämpfung in der Serie enthalten sein können.

Darüber hinaus bezieht sich die Erfindung auf ein Umschlingungsgetriebe mit einem flexiblen Antriebsmittel wie Kette oder Riemen, mindestens zwei mit dem Antriebsmittel in Wirkbeziehung stehende Getrieberäder und einer Spannvorrichtung nach einem der Ansprüche 1 bis 12. Die Spannvorrichtung drückt bei einem Kettenantrieb auf eine schwenkbar angeordnete Spannschiene, die sich an die Kette anlegt und so die Kette zwischen den Getrieberädern spannt. Die Versorgung mit Hydraulikfluid ist bei einem derartigen Umschlingungsgetriebe einfacher als im Vergleich zum Stand der Technik.

Die Erfindung bezieht sich auch auf eine Umschlingungsgetriebeserie, umfassend mindestens ein erstes Umschlingungsgetriebe und mindestens ein zweites Umschlingungsgetriebe, wobei das erste Umschlingungsgetriebe eine erste Spannvorrichtung aus einer Spannvorrichtungsserie gemäß Anspruch 13 und das zweite Umschlingungsgetriebe eine zweite Spannvorrichtung aus einer Spannvorrichtungsserie gemäß Anspruch 13 aufweist.

Durch die Verwendung von standardisierten Bauteilen lassen sich hier Kosten einsparen. Aber auch im Betrieb wirken sich die Vorteile der eingesetzten Spannvorrichtungen positiv auf die Umschlingungsgetriebeserie aus.

Im Folgenden wird die Erfindung anhand von Zeichnungen näher erläutert. Es zeigen:
- Fig. 1: eine hydraulische Wirkungsprinzipskizze für den Ausfahrvorgang des Spannkolbens,
- Fig. 2: eine hydraulische Prinzipskizze des Einfahrvorgangs des Spannkolbens,
- Fig. 3: eine perspektivische Darstellung eines erfindungsgemäßen Einschraubkettenspanners im Halbschnitt,
- Fig. 4: einen Füllkörper zum Einsatz in einem Kettenspanner gemäß Fig. 3,
- Fig. 5: den in Fig. 3 dargestellten Kettenspanner in perspektivischem Halbschnitt, wobei auch die im Inneren des Spannkolbens angeordneten Bauteile geschnitten dargestellt sind,
- Fig. 6: einen Füllkörper zum Einsatz in einem Kettenspanner gemäß Fig. 3 im Vollschnitt,
- Fig. 7a ― Fig. 7e: schematische Abwicklungen der Mantelfläche von Füllkörpervarianten mit unterschiedlich ausgestalteten Drosselkanal bzw. Drosselkanälen,
- Fig. 8a - Fig. 8c: einen Füllkörper mit unterschiedlichen Steigungen des wendelförmigen Drosselkanals in einer Vorderansicht,
- Fig. 9: einen Füllkörper mit Speicherkammer in einer Vorderansicht und
- Fig. 10a - Fig. 10c: verschiedene Varianten der Mantelflächenabwicklung des Füllkörpers mit unterschiedlich ausgestalteten Drosselkanälen und Speicherkammern.

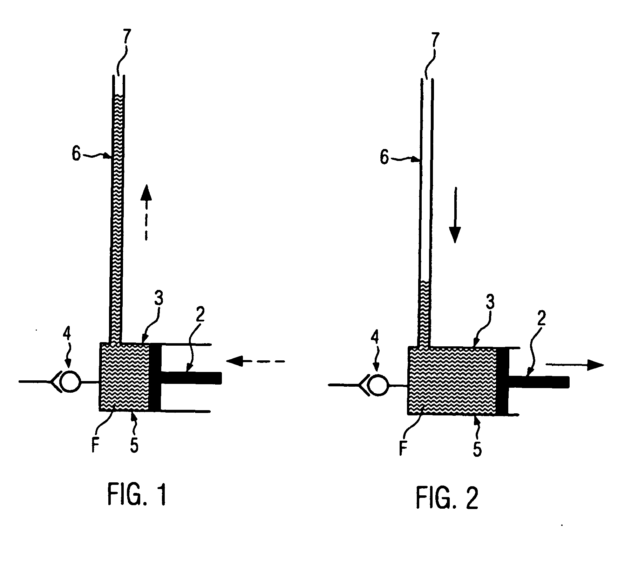

Anhand der Fig. 1 und 2 wird im Folgenden kurz das Prinzip, auf dem die vorliegende Erfindung beruht, erläutert.

Die Spannvorrichtung umfasst einen Spannkolben 2, der in einer Bohrung (Hohlraum) des Gehäuses 3 längsbeweglich geführt ist. Die Abstimmung des Spalts zwischen dem Spannkolben 2 und dem Gehäuse 3 ist derart, dass möglichst wenig, bzw. keine Leckage von Hydraulikfluid F nach außen erfolgt. Gegebenenfalls ist auch die Verwendung einer Gleitdichtung (nicht dargestellt) vorgesehen. Die Spannvorrichtung ist an einer Hydraulikfluidversorgung angeschlossen und das Zufließen von neuem Hydraulikfluid erfolgt über ein Rückschlagventil 4 in die Druckkammer 5. Nachdem zwischen dem Spannkolben 2 und dem Gehäuse 3 der eigentliche Dämpfungsleckspalt 4 nicht vorhanden ist, ist eine mit der Druckkammer 5 in Fluidverbindung stehende Dämpfungseinrichtung 6 vorgesehen. Die Dämpfungseinrichtung 6 steht an dem der Druckkammer 5 gegenüberliegenden Strömungsende mit einer Entlüftungsöffnung 7 in Strömungsverbindung. Das Aufnahmevolumen der Dämpfungseinrichtung 6 ist so bemessen, dass es mindestens dem verdrängten Volumen des Spannkolbens 2 entspricht, wenn dieser einen Ausfahrweg von 1mm-Hub zurücklegt. Die Dämpfungseinrichtung 6 ist so ausgestaltet, dass Hydraulikfluid in gedrosselter Weise in diese hineinströmen kann. In Fig. 1 ist eine Einfahrbewegung des Spannkolbens 2 dargestellt. Aufgrund des Rückschlagventils 4 wird ein Ausströmen von Hydraulikfluid F in die Versorgungsleitung blockiert, so dass Hydraulikfluid F im Wesentlichen vollständig in die Dämpfungseinrichtung 6 hineinfließt.

In Fig. 2 ist die umgekehrte Ausfahrrichtung des Spannkolbens 2 gezeigt. Durch die Sogwirkung öffnet das Rückschlagventil 4 und Hydraulikfluid kann nachströmen. Nachdem aber die Dämpfungseinrichtung 6 unmittelbar mit der Druckkammer 5 in Fluidverbindung steht und ein nicht ganz unerhebliches Aufnahmevolumen aufweist, kann zumindest ein Teil des Hydraulikfluids F auch aus der Dämpfungseinrichtung 6 in die Druckkammer 5 zurückfließen. Die Dämpfungseinrichtung 6 stellt also eine in der Länge und im Querschnitt vorbestimmbare oder einstellbare Leitung zur Verfügung, die eine Dämpfungs- und Ölspeicherfunktion übernimmt. Des Weiteren ist bevorzugt das Aufnahmevolumen der Dämpfungseinrichtung 6 derart bemessen, dass möglichst bei vielen Betriebszuständen der Pegel oder das Niveau des Hydraulikfluids F in der Dämpfungseinrichtung hin- und herpendelt, so dass möglichst wenig Hydraulikfluid F die Entlüftungsöffnung 7 erreicht und so mit geringem Hydraulikfluiddurchsatz der Betreib der Spannvorrichtung erfolgen kann.

Bevorzugt wird demnach bei diesem Prinzip die Dämpfung anders als bei der Ausführung mit Leckspalt zwischen Spannkolben 2 und Gehäuse 3 durch eine sehr lange Leitung erzielt. Diese kann auch einen größeren Querschnitt aufweisen, da die für die Einstellung der Dämpfung notwendigen Druckverluste, hauptsächlich mit der Länge und der Form/Geometrie der Leitung erzeugt werden. Damit ist eine größere Hydraulikfluidmenge in der Leitung vorhanden, die somit als Zwischenspeicher wirkt. Somit geht das für die Dämpfung verwendete Öl zum Großteil nicht über die Entlüftungsöffnung 7 verloren, sondern verbleibt in der Spannvorrichtung.

Gemäß Fig. 1 hat die für das Einpressen des Hydraulikfluids in die Dämpfungseinrichtung 6 aufzuwendende Kraft eine dämpfende Funktion.

Gemäß Fig. 2 entsteht durch Ausfahren des Spannkolbens 2 ein Unterdruck, so dass Hydraulikfluid über das Rückschlagventil 4 und die Dämpfungseinrichtung 6 angesogen wird.

Theoretisch kann, durch die ideale Abstimmung an einen bestimmten Arbeitspunkt, die benötigte Hydraulikfluidmenge, alleine durch das bereits vorhandene Ölvolumen der Druckkammer 5 und der Dämpfungseinrichtung 6 ausreichend sein. Um das Hydraulik fluidansaugvolumen aus der Versorgungsleitung zu minimieren, ist eine Drosselung des Zulaufs oder die Senkung des Hydraulikfluiddruckes denkbar.

Beansprucht wird die Ausgestaltung der Dämpfungseinrichtung 6 unter Zuhilfenahme eines im Spannkolben 2 angeordneten Füllkörpers.

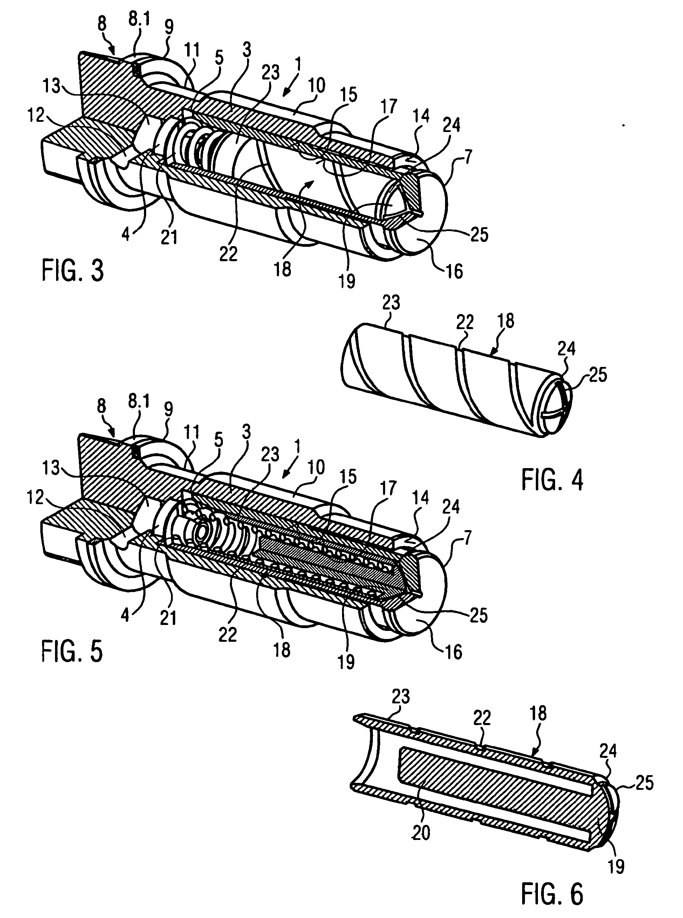

Eine konkrete erfindungsgemäße Ausgestaltung der vorliegenden Erfindung wird nunmehr anhand der Fig. 3 bis 6 näher erläutert. In den Fig. 3 und 5 ist jeweils als Spannvorrichtung der gleiche Kettenspanner 1 dargestellt. Im vorliegenden Fall handelt es sich um einen Einschraubkettenspanner, der in eine Bohrung im Getriebegehäuse oder im Motorblock eingeschraubt wird. Das Gehäuse 3 des Kettenspanners 1 ist als Drehfrästeil hergestellt und weist einen mit einem Sechskant versehenen Einschraubkopf 8 mit Anlageflansch 8.1 auf. Unterhalb des Anlageflansches 8.1 ist eine im Querschnitt rechteckförmige Ringdichtung 9 angeordnet. Zwischen der Ringdichtung 9 und einem mit einem Gewinde versehenen Einschraubbereich 10 ist eine Ringnut 11 ausgeformt, über die die Versorgung mit Hydrauliköl erfolgt. Hierzu ist an entsprechender Stelle im Getriebegehäuse oder im Motorblock eine Ölzulaufbohrung vorgesehen, die in dieser Ringnut 11 mündet. Eine radial verlaufende Verbindungsbohrung 12 verbindet die Ringnut 11 mit einer Vorkammer 13 im Inneren des Gehäuses 3. Das Gehäuse 3 ist mit einer an seiner Stirnseite 14 offenen Aufnahmebohrung 15 zum längsbeweglichen Aufnehmen des Spannkolbens 2 versehen. Am Grund der Aufnahmebohrung 15 befindet sich ein Sitz für ein Rückschlagventil 4, über das Hydrauliköl aus der Vorkammer 13 in die zwischen dem Spannkolben 2 und dem Gehäuse 3 gebildete Druckkammer 5 hineinfließen kann.

Der Spannkolben 2 ist als hohlzylindrisches Bauteil mit einem einseitig bis auf eine zentrale Entlüftungsöffnung 7 verschlossenen Aufdrückkopf 16 versehen. Die Entlüftungsöffnung 7 steht mit der Bohrung 17 im Inneren des Spannkolbens 2 in Verbindung (hierauf wird noch genauer eingegangen). Der Spannkolben 2 ist lediglich über einen bestimmten Bereich innerhalb der Aufnahmebohrung 15 geführt, und zwar mit einer engen Spielpassung, so das eine Leckage durch diesen Spalt gegenüber herkömmlichen Kettenspannern, die an dieser Stelle einen Leckspalt zu Dämpfungszwecken aufweisen, stark reduziert ist. In idealer Weise soll möglichst kein Hydrauliköl mehr durch diesen Spalt herausfließen. Aus wirtschaftlichen Gründen wird man eine geeignete Spielpassung wählen, die zumindest ein vertretbares Minimum an Leckage hat. Im Inneren des Spannkolbens 2 ist als Bestandteil der Dämpfungseinrichtung 6 ein hohlzylindrischer Füllkörper 18 angeordnet. Der Füllkörper 18 ist mit einem kugelabschnittsförmigen Kopf 19 versehen und weist in seinem Inneren einen sich koaxial erstreckenden dornförmigen Fortsatz 20 auf. Zwischen der Innenwandung des Füllkörpers 18 und dem Fortsatz 20 ist somit ein ringförmiger Aufnahmeraum ausgebildet. In der Druckkammer 5 ist neben dem Füllkörper 18 auch eine Druckfeder 21 angeordnet. Das eine Ende der Druckfeder 21 stützt sich auf dem Rückschlagventil 4 und somit am Grund des Gehäuses 3 und das andere Ende auf der Rückseite des Kopfes 19 am Füllkörper 18 ab. Hierdurch ist die Druckfeder 21 über einen großen Betrag ihrer Länge im ringförmigen Aufnahmeraum zwischen dem Fortsatz 20 und der Innenwandung des Füllkörpers 18 aufgenommen. Die Druckfeder 21 hält zum einen das Rückschlagventil 4 und zum anderen den Füllkörper 18 in Position. Eine Hauptaufgabe der Druckfeder 21 besteht aber auch darin, bei noch druckloser Druckkammer 5 eine Mindestvorspannung mittels des Kettenspanners aufzubringen.

Das Besondere dieses Kettenspanners 1 gegenüber herkömmlichen Kettenspannern ist neben des geringen Spalts zwischen Spannkolben 2 und Gehäuse 3 der besonders ausgeformte Füllkörper 18. Bislang verwendete Füllkörper 18 hatten oft eine Pilzform und erfüllten hauptsächlich zwei Zwecke. Zum einen dienten sie der Reduzierung des Druckkammervolumens, so dass eine schnellere Füllung mit Hydrauliköl erfolgen kann und zum anderen wurde eine gedrosselte Entlüftung durch den Füllkörperkopf 12 bewirkt. Diese Funktionen übernimmt der Füllkörper 18 bei der vorliegenden Konstruktion ebenfalls. Hinzu kommt, dass dieser als Bestandteil der Dämpfungseinrichtung 6 ausgestaltet ist. Hierzu weist der Füllkörper 18 eine in seiner Mantelfläche eingeformten, wendelförmig umlaufenden Drosselkanal 22 auf. Im vorliegenden Fall hat der Drosselkanal 22 einen rechteckförmigen Querschnitt; jedoch sind Querschnitt und Verlauf des Drosselkanals 22 nahezu beliebig wählbar, um eine vorbestimmte Dämpfungscharakteristik zu erzielen. Damit insbesondere beim anfänglichen Befüllen der Druckkammer 5 das Hydraulikfluid auch tatsächlich in diesen Drosselkanal 22 einfließt, ist das hintere Ende des Füllkörpers 18 mit einem eng an der Innenwandung der Bohrung 17 anliegenden Dichtungsbereich 23 versehen. Den Dichtungsbereich 23 über die gesamte Länge des Füllkörpers 18 auszuführen, ist nicht zwingend erforderlich, da durch Druckaufbau in der Druckkammer 5 sich der Füllkörper 18 dehnt und eng gegen die Bohrung 17 gepresst wird. Bevorzugt ist der Füllkörper 18 aus einem Kunststoffmaterial hergestellt. Während das hintere Ende des Drosselkanals 22 in die Druckkammer 5 mündet, mündet das vordere Ende des Drosselkanals 22 in einen den Kopf 19 des Füllkörpers 18 umgebenden Ringkanal 24. Dieser Ringkanal 24 formt zwischen der Bohrung 17 des Spannkolbens 2 und dem Füllkörper 18 einen grö-βeren Strömungsquerschnitt, so dass an dieser Stelle im Wesentlichen keine Drosselung mehr vorhanden ist und der Ringkanal 24 nicht zur Dämpfungseinrichtung hinzuzuzählen ist. Der Ringkanal 24 steht über zwei kreuzförmig, in die kugelförmige Frontfläche des Kopfes 19 eingearbeitete Abströmkanäle 25 mit der Entlüftungsöffnung 7 in Verbindung.

Das Aufnahmevolumen des Drosselkanals 22 entspricht mindestens 30 % des von dem Spannkolben 2 bei einem 1mm-Ausfahrhub hinzukommende Volumens in der Druckkammer 5. Das bedeutet, dass der bei einem 1mm-Ausfahrhub hinzukommende Volumenbetrag maßgeblich ist für die Berechnung des minimalen Volumens des Drosselkanals 22.

Der in den Fig. 4 und 6 beispielhaft dargestellte Füllkörper 18 ist nicht identisch zu dem in den Fig. 3 und 5 eingesetzten Füllkörper, sondern weist einen Drosselkanal 22 mit geringerer Steigung und somit mehr Wendeln zwischen Anfang und Ende auf. Dieser Füllkörper in den Fig. 4 und 6 kann jedoch ohne Weiteres alternativ zu dem Füllkörper 18 aus den Fig. 3 und 5 eingesetzt werden, um eine andere Dämpfungscharakteristik zu erhalten. Hierdurch lässt sich bei dem ansonsten baugleichen Kettenspanner 1 lediglich durch Austausch des Füllkörpers 18 ein Kettenspanner 1 mit anderer Dämpfungscharakteristik erzeugen. Entsprechend lassen sich innerhalb einer Kettenspannerserie durch eben diesen Austausch unterschiedliche Kettenspanner 1 mit entsprechend zugehörigen unterschiedlichen Dämpfungscharakteristiken herstellen. Bei dem im Kfz-Bereich vorliegenden Massenmarkt stellt dies einen erheblichen Fertigungsvorteil dar, weil nicht wie früher eine Abstimmung der Dämpfung über die individuelle Ausgestaltung des Leckspalts zwischen Gehäuse und Spannkolben erfolgen muss.

Die Wirkungs- und Funktionsweise des oben beschriebenen Ausführungsbeispiels lässt sich anhand der bereits erläuterten Prinzipskizzen 1 und 2 sehr leicht nachvollziehen. Der Drosselkanal 22 stellt ein gewisses Speichervolumen für Hydrauliköl bereit, so dass beim Ausfahren des Spannkolbens Hydrauliköl nicht nur über das Rückschlagventil 4 in die Druckkammer 5 einströmt, sondern auch Hydrauliköl aus dem Drosselkanal 22 wieder herausgesaugt wird in die Druckkammer 5. Bei entsprechender Abstimmung des Drosselkanals 22 pendelt die Hydraulikölsäule insbesondere bei normalem Betriebszustand immer etwas in dem Drosselkanal 22 hin und her. Aufgrund dieses Wirkprinzips kommt man mit einem relativ geringen Hydrauliköldurchsatz aus, da die Verluste (Hydrauliköl, das über die Entlüftungsöffnung 7 herausfließt) in Grenzen gehalten werden. Beim Einfahren des Spannkolbens 2 verschließt das Rückschlagventil 4 und der Drosselkanal 22 zwischen dem Füllkörper 18 und dem Spannkolben 2 entfaltet seine Dämpfungswirkung, so dass nun ein gedämpftes Einfahren des Spannkolbens 2 möglich ist. Beim Abschalten der Hydraulikversorgung kann Hydrauliköl unter Umständen aus der Druckkammer 5 entweichen und Luft hierin enthalten sein. Beim Wiederanfahren der Hydraulikversorgung wird dann in üblicher Weise mittels des Füllkörpers 18, des Drosselkanals 22, dem Ringkanal 24 und dem Abströmkanal 25 sowie der Entlüftungsöffnung 7 eine Entlüftung stattfinden. Für die Drosselwirkung ist die Verbindung der Dämpfungseinrichtung 6 mit dieser Entlüftungsöffnung 7 auch ein wesentlicher Bestandteil.

Im Folgenden werden weitere Ausführungsformen der vorliegenden Erfindung anhand einiger Zeichnungen näher erläutert.

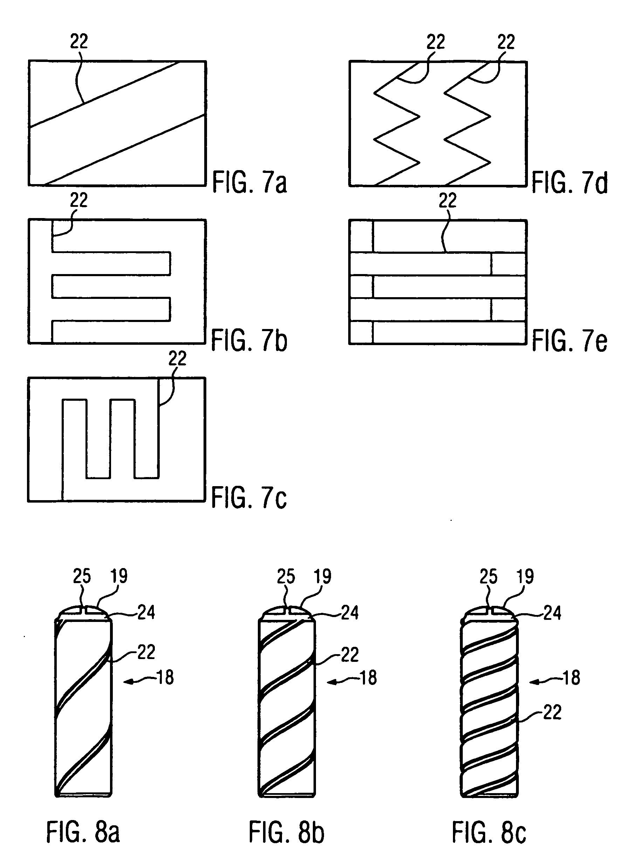

Mittels der Fig. 7a bis 7e sind unterschiedliche Verlaufsformen des Drosselkanals 22 beispielhaft wiedergegeben. Bei den Darstellungen handelt es sich jeweils um eine Abwicklung der Mantelfläche des Spannkolbens 2.

In Fig. 7a ist die bereits bekannte wendelförmig umlaufende Form des Drosselkanals 22 dargestellt.

Fig. 7b zeigt einen Drosselkanal 22, der neben achsparallel verlaufenden Abschnitten auch lediglich in Umfangsrichtung verlaufende Abschnitte, quasi nach Art eines Mäanders aufweist.

In Fig. 7c ist wiederum eine Mäanderform des Drosselkanals 22 dargestellt, allerdings überwiegen diesmal die in achsparalleler Richtung verlaufenden Abschnitte des Mäanders.

In Fig. 7d sind zwei nebeneinander angeordnete zick-zack-förmige Drosselkanäle 22 vorgesehen.

In Fig. 7e ist der Drosselkanal 22 aus vier Ringkanälen und diese jeweils miteinander verbindende achsparallele Verbindungsstücke ausgeformt. Am Anfang und am Ende ist dann jeweils ein Verbindungsstück zum einen für die Druckkammer 13 und zum anderen für den Ringkanal 24 vorhanden.

Selbstverständlich lassen sich zur Erzielung einer entsprechenden Drosselwirkung auch andersartige Formen einsetzen. An diese Stelle sei ergänzend erwähnt, dass derartige Kanalformen auch im Inneren des Füllkörpers eingearbeitet werden könnten. Prinzipiell, wenn auch aufwändiger, besteht die Möglichkeit, diese auch auf der Innenseite des Spannkolbens 2 vorzusehen, wobei dann der Füllkörper 18 die Kanäle dann einfach nur verschließt. Die Anordnung im Inneren des Füllkörpers könnte durch eine mehrteilige Ausgestaltung des Füllkörpers 18 erfolgen.

Die Ausführungsformen gemäß der Fig. 8a bis 8c stellen jeweils unterschiedliche Füllkörper mit unterschiedlichen Dämpfungscharakteristiken dar, wobei bei sämtlichen Ausführungsformen auf ein und dasselbe Prinzip der Ausformung des Drosselkanals 22 zurückgegriffen wird. Es handelt sich um die bereits bekannte Wendelform, wobei jeweils ausgehend von Fig. 8a der Drosselkanal 22 in den Füllkörper 18 mit jeweils geringerer Steigung (Fig. 8b und Fig. 8c) eingeformt ist, wodurch sich bei ansonsten gleichbleibendem Strömungsquerschnitt jeweils ein größeres Aufnahmevolumen und ein längerer Drosselkanal 22 ergibt.

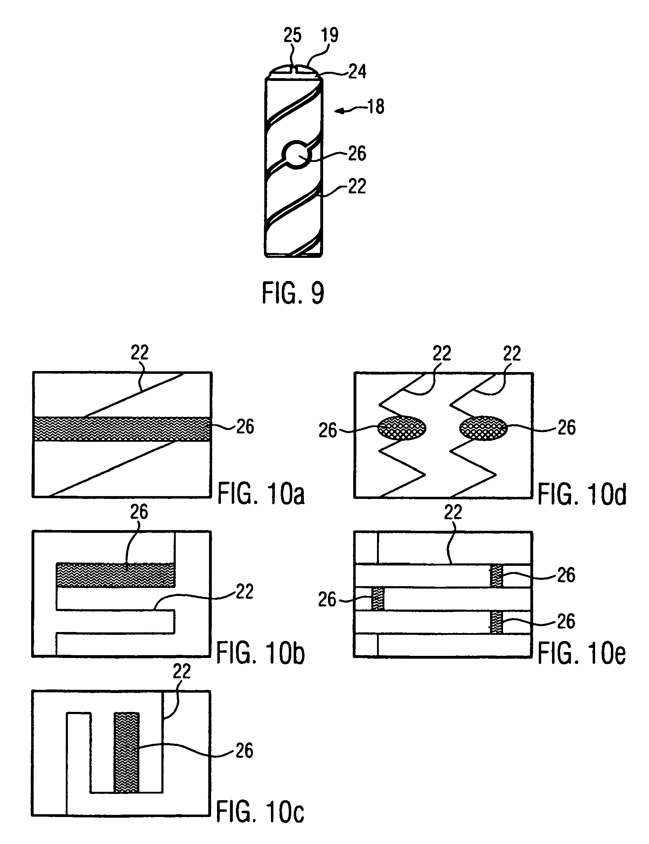

Neben der Ausformung als einfachen Kanal besteht auch die Möglichkeit, innerhalb des Drosselwegs zusätzliche Hydraulikölspeicher vorzusehen. Anhand der Fig. 9 ist nunmehr ein solches Beispiel dargestellt. Etwa in der Mitte der Länge des Füllkörpers 18 ist eine kreisförmige Ölkammer 26 vorgesehen, die die gleiche Tiefe wie der Drosselkanal 22 aufweist; jedoch als eine Art Zwischenspeicher dient. Nachdem der Drosselkanal 22 sowohl zur Ölkammer 26 hinführt als auch von dieser wegführt, ergeben sich keine negativen Einflüsse auf das Dämpfungsverhalten, sondern es wird ein entsprechendes Aufnahmevolumen für Hydrauliköl geschaffen.

Anhand der Fig. 10a bis 10e werden nunmehr verschiedenste Ausführungsmöglichkeiten derartiger Ölkammern 26 beispielhaft näher beschrieben. Dabei korrespondieren die Ausgestaltungen der Drosselkanäle 22 mit den Ausgestaltungen der Drosselkanäle der Fig. 7a bis 7e entsprechend.

In Fig. 10a ist etwa in der Mitte der Länge des Füllkörpers 18 eine Ölkammer 26 in Form einer umlaufenden Ringnut ausgeformt, die den ansonsten wendelförmig umlaufenden Drosselkanal 22 unterbricht.

In der Fig. 10b ist in die Mäanderform in einem Umfangsbereich eine Vertiefung eingeformt, die in Form einer Wanne Öl aufnimmt.

In ähnlicher Weise, jedoch in achsparalleler Richtung ist eine entsprechende Ölkammer 26 in Wannenform bei Fig. 10c zu erkennen.

Gemäß der Fig. 10d ist in jeden zick-zack-förmig ausgestalteten Drosselkanal 22 jeweils eine elliptisch ausgeformte Ölkammer 26 eingeformt.

In Fig. 10e ist eine Variante zu erkennen, bei der die achsparallelen Verbindungen zwischen den Ringkanälen als kleine Verbindungsölkammern 26 ausgestaltet sind.

Auch die obigen Ausgestaltungen sollen lediglich als Beispiele verstanden sein. Die Ausgestaltungsformen können vielfältig sein. Die Ölkammern 26 müssen nicht zwingend, weisen aber meistens die gleiche Tiefe wie die Drosselkanäle 22 auf.

Durch die erfindungsgemäße Ausgestaltung unter Einbindung des Füllkörpers 18 zur Ausgestaltung der Dämpfungseinrichtung 6 ergeben sich zahlreiche Vorteile für einen Kettenspanner 1. Zum einen hat dieser einen geringen Ölverbrauch, wodurch Probleme durch Unterversorgung beseitigt werden. Die Abstimmung der Dämpfung erfolgt mittels des Füllkörpers 18 und nicht mehr über einen Leckspalt zwischen dem Spannkolben 2 und dem Gehäuse 3. Hierdurch lassen sich Fertigungsmaße für Kolben 2 und Gehäuse 3 standardisieren. Bei Aluminiumkolben vermeidet der Füllkörper 18 einen Verschleiß zwischen dem Spannkolben 2 und der Druckfeder 21. Der Füllkörper 18 übernimmt die Funktion, die bislang verwendete Füllkörper bereits ausführten zusätzlich zur Dämpfungsfunktion. Des Weiteren kann die Führungslänge des Spannkolbens 2 im Gehäuse 3 verkürzt werden, weil hier keine gezielte Leckage mehr erfolgen soll.

Die Standardisierung von Fertigungsmaßen für Spannkolben 2 und Gehäuse 3 hat zur Folge, dass Kettenspannerserien unter Verwendung dieser standardisierten Fertigungsmaße für Kolben und Gehäuse erzeugt werden können. Wichtig ist hierbei insbesondere die Aufnahmebohrung 15 im Gehäuse 3 und der zugehörige Durchmesser des Spannkolbens 2. Lediglich durch Austausch unterschiedlich bemaßter und/oder ausgestalteter Füllkörper 18 können innerhalb dieser Spannvorrichtungsserien Kettenspanner 1 mit unterschiedlichen Dämpfungscharakteristiken erhalten werden. Gleiches gilt selbstverständlich auch für die kompletten Umschlingungstriebe und zugehörigen Umschlingungsgetriebeserien, so dass im günstigsten Fall lediglich durch Austauschen von einem einzigen Bauteil, nämlich dem Füllkörper 18, ganze Getriebeserien bedient werden können, die entsprechend unterschiedliche Dämpfungscharakteristiken erfordern.

## Patentansprüche

1. Spannvorrichtung (1) für ein flexibles Antriebsmittel wie Kette oder Riemen, mit einem Gehäuse (3), einem im Gehäuse (3) verschiebbar angeordneten, mit einem Hohlraum versehenen Spannkolben (2), einer zwischen dem Gehäuse (3) und Spannkolben (2) gebildeten Druckkammer (5) für Hydraulikfluid, einer im Spannkolben (2) angeordneten Entlüftungsöffnung (7) und einer einerseits mit der Entlüftungsöffnung (7) und andererseits mit der Druckkammer (5) in Strömungsverbindung stehenden Dämpfungseinrichtung (6), **dadurch gekennzeichnet, dass** in dem Hohlraum des Spannkolbens (2) und somit in der Druckkammer (5) ein Füllkörper (18) angeordnet ist, der zumindest Bestandteil der Dämpfungseinrichtung (6) derart ist, dass die Dämpfungseinrichtung (6) ein Aufnahmevolumen für Hydraulikfluid aufweist, das mindestens 30 % des bei einem 1 mm-Hub des Spannkolbens in Ausfahrrichtung hinzukommenden Volumens der Druckkammer (5) entspricht.

2. Spannvorrichtung (1) nach Anspruch 1, **dadurch gekennzeichnet, dass** zumindest als Bestandteil der Dämpfungseinrichtung (6) zwischen dem Spannkolben (2) und dem Füllkörper (18) und/oder im Füllkörper (18) mindestens ein Drosselkanal (22) gebildet ist, der zum einen mit der Druckkammer (5) und zum anderen mit der Entlüftungsöffnung (7) in Strömungsverbindung steht.

3. Spannvorrichtung (1) nach Anspruch 2, **dadurch gekennzeichnet, dass** zumindest als Bestandteil der Dämpfungseinrichtung (6) zwischen dem Spannkolben und dem Füllkörper (18) und/oder in dem Füllkörper (18) mindestens eine den Strömungsquerschnitt des Drosselkanals (22) zumindest bereichsweise vergrößernde Speicherkammer (26) gebildet ist.

4. Spannvorrichtung(1) nach einem der vorangegangenen Ansprüche, **dadurch gekennzeichnet, dass** der Füllkörper (18) mit seiner Querschnittsaußenkontur an die Querschnittsinnenkontur des Hohlraums im Spannkolben (2) angepasst ist, in diesen im Wesentlichen passgenau eingesetzt ist, und über einen Längenbereich (23) mit seinem Umfang in Dichtkontakt mit der Seitenwand des Hohlraums derart steht, dass zumindest in diesem Längenbereich (23) als Strömungsquerschnitt für die Dämpfungseinrichtung (6) weitgehend nur der Strömungsquerschnitt des Drosselkanals (22) zur Verfügung steht.

5. Spannvorrichtung (1) nach einem der vorangegangenen Ansprüche, **dadurch gekennzeichnet, dass** im Druckraum (5) eine in Achsrichtung des Spannkolbens (2) wirkende Druckfeder (21) angeordnet ist, die sich einerseits zumindest mittelbar am Gehäuse (3) und andererseits zumindest mittelbar am Füllkörper (18) abstützt.

6. Spannvorrichtung (1) nach einem der vorangegangenen Ansprüche, **dadurch gekennzeichnet, dass** der Füllkörper (18) hülsenförmig ausgestaltet ist.

7. Spannvorrichtung (1) nach Anspruch 6, **dadurch gekennzeichnet, dass** der Füllkörper (18) einen die Hülsenform im Wesentlichen verschließenden Kopf (19) aufweist, der zumindest mittelbar gegen eine Endwand des Hohlraums im Spannkolben (2) gedrückt ist.

8. Spannvorrichtung (1) nach Anspruch 6 oder 7, **dadurch gekennzeichnet, dass** der Füllkörper (18) innen einen dornförmigen Fortsatz (20) aufweist, der sich zur Reduzierung des Volumens des Druckraums (5) in das Innere der Druckfeder (21) erstreckt.

9. Spannvorrichtung (1) nach Anspruch 7 oder 8, **dadurch gekennzeichnet, dass** der Kopf (19) des Füllkörpers (18) alleine und/oder im Zusammenspiel mit der Endwand des Hohlraums eine Fluidverbindung zwischen dem Drosselkanal (22) und der Entlüftungsöffnung (7) bereitstellt.

10. Spannvorrichtung (1) nach einem der Ansprüche 2 bis 9, **dadurch gekennzeichnet, dass** der Drosselkanal (22) wendelförmig zwischen dem Spannkolben (2) und dem Füllkörper (18) und/oder im Füllkörper (18) umläuft.

11. Spannvorrichtung nach Anspruch 9 oder 10, **dadurch gekennzeichnet, dass** die Fluidverbindung einen zwischen der Endwand des Hohlraums und dem Kopf (19) des Füllkörpers (18) und/oder im Füllkörper (18) angeordneten Ringkanal (24) umfasst.

12. Spannvorrichtung nach Anspruch 11, **dadurch gekennzeichnet, dass** die Entlüftungsöffnung (7) als zentrale im Spannkolbenkopf (16) angeordnete Bohrung ausgeführt ist und die Fluidverbindung mindestens einen zwischen der Endwand des Hohlraums und dem Kopf (19) des Füllkörpers (18) und/oder im Kopf (19) des Füllkörpers (18) angeordneten Abströmkanal (25) umfasst, der den Ringkanal (24) mit der zentralen Entlüftungsöffnung (7) verbindet.

13. Spannvorrichtungsserie umfassend mindestens eine erste und mindestens eine zweite Spannvorrichtung (1) nach einem der Ansprüche 1 bis 12, **dadurch gekennzeichnet, dass** die erste und die zweite Spannvorrichtung (1) eine Gehäusebohrung (15) zur Aufnahme des Spannkolbens (2) und einen Spannkolben (2) von jeweils im Durchmesser standardisierter gleicher Größe aufweisen und sich die Dämpfungseinrichtung (6) der mindestens einen ersten Spannvorrichtung von der Dämpfungseinrichtung (6) der mindestens einen zweiten Spannvorrichtung in der Dämpfungscharakteristik unterscheidet, wobei die unterschiedlichen Dämpfungscharakteristiken mittels unterschiedlich bemaßter und/oder ausgestalteter Füllkörper (18) erhalten sind.

14. Umschlingungsgetriebe mit einem flexiblen Antriebsmittel wie Kette oder Riemen, mindestens zwei mit dem Antriebsmittel in Wirkbeziehung stehender Getrieberäder und einer Spannvorrichtung (1) nach einem der Ansprüche 1 bis 12.

15. Umschlingungsgetriebeserie umfassend mindestens ein erstes Umschlingungsgetriebe und mindestens ein zweites Umschlingungsgetriebe, wobei das erste Umschlingungsgetriebe eine erste Spannvorrichtung aus einer Spannvorrichtungsserie gemäß Anspruch 13 und das zweite Umschlingungsgetriebe eine zweite Spannvorrichtung aus einer Spannvorrichtungsserie gemäß Anspruch 13 aufweist.

## Claims

1. Tensioning device (1) for a flexible drive means, such as a chain or a belt, with a housing (3), a tensioning piston (2) movably arranged in the housing (3) and provided with a hollow space, a pressure chamber (5) for hydraulic fluid formed between the housing (3) and the tensioning piston (2), a vent opening (7) disposed in the tensioning piston (2), and a damping means (6) in flow communication on the one hand with the vent opening (7) and on the other hand with the pressure chamber (5), **characterized in that** a packing element (18) is arranged in the hollow space of the tensioning piston (2) and thus in the pressure chamber (5), the packing element (18) is at least a component of the damping means (6) such that the damping means (6) comprises a capacity for hydraulic fluid which corresponds to at least 30% of the volume of the pressure chamber (5) added with a 1 mm stroke of the tensioning piston in the extension direction.

2. Tensioning device (1) according to claim 1, **characterized in that**, at least as a component of the damping means (6), at least one throttle channel (22) is formed between the tensioning piston (2) and the packing element (18), and/or in the packing element (18), the throttle channel being in flow communication on the one hand with the pressure chamber (5) and on the other hand with the vent opening (7).

3. Tensioning device (1) according to claim 2, **characterized in that**, at least as a component of the damping means (6), at least one storage chamber (26) enlarging the cross-section of flow of the throttle channel (22) at least in sections is formed between the tensioning piston and the packing element (18), and/or in the packing element (18).

4. Tensioning device (1) according to one of the preceding claims, **characterized in that** the outer contour of the cross-section of the packing element (18) is adapted to the inner contour of the cross-section of the hollow space in the tensioning piston (2), is inserted into the latter essentially with an accurate fit, and is with its circumference in sealing contact with the side wall of the hollow space over a length region (23) such that at least in this length region (23) largely only the cross-section of flow of the throttle channel (22) is available as a cross-section of flow for the damping means (6).

5. Tensioning device (1) according to one of the preceding claims, **characterized in that** a pressure spring (21) acting in the axial direction of the tensioning piston (2) is arranged in the pressure space (5) which is supported on the one hand at least indirectly at the housing (3), and on the other hand at least indirectly at the packing element (18).

6. Tensioning device (1) according to one of the preceding claims, **characterized in that** the packing element (18) is designed like a sleeve.

7. Tensioning device (1) according to claim 6, **characterized in that** the packing element (18) comprises a head (19) essentially closing the sleeve shape, which is at least indirectly pressed against an end wall of the hollow space in the tensioning piston (2).

8. Tensioning device (1) according to claim 6 or 7, **characterized in that** the packing element (18) comprises a mandrel-like extension (20) inside, which extends into the interior of the pressure spring (21) for reducing the volume of the pressure space (5).

9. Tensioning device (1) according to claim 7 or 8, **characterized in that** the head (19) of the packing element (18) provides, alone and/or in cooperation with the end wall of the hollow space, a fluid communication between the throttle channel (22) and the vent opening (7).

10. Tensioning device (1) according to one of claims 2 to 9, **characterized in that** the throttle channel (22) extends helically between the tensioning piston (2) and the packing element (18), and/or in the packing element (18).

11. Tensioning device according to claim 9 or 10, **characterized in that** the fluid communication comprises a ring channel (24) disposed between the end wall of the hollow space and the head (19) of the packing element (18), and/or in the packing element (18).

12. Tensioning device according to claim 11, **characterized in that** the vent opening (7) is designed as a central bore arranged in the tensioning piston head (16), and the fluid communication comprises at least one discharge channel (25) disposed between the end wall of the hollow space and the head (19) of the packing element (18), and/or in the head (19) of the packing element (18), the discharge channel connecting the ring channel (24) with the central vent opening (7).

13. Series of tensioning devices, comprising at least one first and at least one second tensioning device (1) according to one of claims 1 to 12, **characterized in that** the first and the second tensioning devices (1) comprise a housing bore (15) for receiving the tensioning piston (2) and a tensioning piston (2) having a standardized diameter of the same size, and the damping means (6) of the at least one first tensioning device differs from the damping means (6) of the at least one second tensioning device in its damping characteristic, where the different damping characteristics are obtained by means of packing elements (18) of different dimensions or embodiments.

14. Transmission with a flexible drive means, such as a chain or a belt, of at least two gearwheels in active relation with the drive means, and a tensioning device (1) according to one of claims 1 to 12.

15. Series of transmissions, comprising at least one first transmission and at least one second transmission, where the first transmission comprises a first tensioning device of a series of tensioning devices according to claim 13, and the second transmission comprises a second tensioning device of a series of tensioning devices according to claim 13.

## Revendications

1. Dispositif tendeur (1) pour un moyen de transmission d'entraînement flexible, tel une chaîne ou une courroie, comprenant un carter (3), un piston tendeur (2) agencé de manière coulissante dans le carter (3) et pourvu d'une cavité, une chambre de pression (5) pour du fluide hydraulique formée entre le carter (3) et le piston tendeur (2), une ouverture de purge (7) agencée dans le piston tendeur (2), et un dispositif d'amortissement (6) en liaison d'écoulement d'une part avec l'ouverture de purge (7) et d'autre part avec la chambre de pression (5), **caractérisé en ce que** dans la cavité du piston tendeur (2) et ainsi dans la chambre de pression (5), est agencé un corps de garnissage (18), qui fait partie intégrante du dispositif d'amortissement (6) au moins de manière telle, que le dispositif d'amortissement (6) présente un volume d'absorption pour du fluide hydraulique, qui correspond au moins à 30% du volume rajouté à la chambre de pression (5) pour une course de 1 mm du piston tendeur dans la direction de sortie de celui-ci.

2. Dispositif tendeur (1) selon la revendication 1, **caractérisé en ce qu'**au moins en tant que partie intégrante du dispositif d'amortissement (6), il est formé entre le piston tendeur (2) et le corps de garnissage (18) et/ou dans le corps de garnissage (18), au moins un canal d'étranglement (22), qui est en liaison d'écoulement d'une part avec la chambre de pression (5) et d'autre part avec l'ouverture de purge (7).

3. Dispositif tendeur (1) selon la revendication 2, **caractérisé en ce qu'**au moins en tant que partie intégrante du dispositif d'amortissement (6), il est formé entre le piston tendeur et le corps de garnissage (18) et/ou dans le corps de garnissage (18), au moins une chambre d'accumulation (26), qui agrandit au moins dans certaines zones, la section transversale d'écoulement du canal d'étranglement (22).

4. Dispositif tendeur (1) selon l'une des revendications précédentes, **caractérisé en ce que** le corps de garnissage (18) est adapté avec son contour extérieur de section transversale, au contour intérieur de section transversale de la cavité dans le piston tendeur (2), en étant inséré dans celui-ci sensiblement de manière précisément ajustée, et est, avec sa périphérie, en contact d'étanchéité avec la paroi latérale de la cavité, sur une zone de longueur (23), de manière telle qu'au moins dans cette zone de longueur (23), la section transversale d'écoulement pour le dispositif d'amortissement (6) n'est formée, dans une large mesure, que par la section transversale d'écoulement du canal d'étranglement (22).

5. Dispositif tendeur (1) selon l'une des revendications précédentes, **caractérisé en ce que** dans la chambre de pression (5) est agencé un ressort de compression (21), qui agit dans la direction axiale du piston tendeur (2), et s'appuie, d'un côté au moins indirectement sur le carter (3), et de l'autre côté au moins indirectement sur le corps de garnissage (18).

6. Dispositif tendeur (1) selon l'une des revendications précédentes, **caractérisé en ce que** le corps de garnissage (18) est d'une configuration en forme de douille.

7. Dispositif tendeur (1) selon la revendication 6, **caractérisé en ce que** le corps de garnissage (18) présente une tête (19), qui ferme sensiblement la forme de douille, et est pressée, au moins indirectement, contre la paroi d'extrémité de la cavité dans le piston tendeur (2).

8. Dispositif tendeur (1) selon la revendication 6 ou la revendication 7, **caractérisé en ce que** le corps de garnissage (18) présente, à l'intérieur, un appendice (20) en forme de tourillon, qui s'étend à l'intérieur du ressort de compression (21), en vue de réduire le volume de la chambre de pression (5).

9. Dispositif tendeur (1) selon la revendication 7 ou la revendication 8, **caractérisé en ce que** la tête (19) du corps de garnissage (18) réalise à elle seule et/ou en combinaison avec la paroi d'extrémité de la cavité, une liaison fluidique entre le canal d'étrangement (22) et l'ouverture de purge (7).

10. Dispositif tendeur (1) selon l'une des revendications 2 à 9, **caractérisé en ce que** le canal d'étrangement (22) s'étend de manière périphérique, en forme d'hélice, entre le piston tendeur (2) et le corps de garnissage (18) et/ou dans le corps de garnissage (18).

11. Dispositif tendeur selon la revendication 9 ou la revendication 10, **caractérisé en ce que** la liaison fluidique comprend un canal annulaire (24) agencé entre la paroi d'extrémité de la cavité et la tête (19) du corps de garnissage (18) et/ou dans le corps de garnissage (18).

12. Dispositif tendeur selon la revendication 11, **caractérisé en ce que** l'ouverture de purge (7) est réalisée en tant que perçage central agencé dans la tête (16) du piston tendeur, et la liaison fluidique comprend au moins un canal d'écoulement de sortie (25), qui est agencé entre la paroi d'extrémité de la cavité et la tête (19) du corps de garnissage (18) et/ou dans la tête (19) du corps de garnissage (18), et qui relie le canal annulaire (24) à l'ouverture de purge (7) centrale.

13. Série de dispositifs tendeurs comprenant au moins un premier et au moins un deuxième dispositif tendeur (1) selon l'une des revendications 1 à 12, **caractérisée en ce que** le premier et le deuxième dispositif tendeur (1) présentent un alésage de carter (15) destiné à recevoir le piston tendeur (2) et un piston tendeur (2) respectivement d'une même grandeur standardisée en diamètre, et **en ce que** le dispositif d'amortissement (6) dudit au moins un premier dispositif tendeur se distingue du dispositif d'amortissement (6) dudit au moins un deuxième dispositif tendeur, quant à la caractéristique d'amortissement, les caractéristiques d'amortissement différentes étant obtenues au moyen de corps de garnissage (18) de dimensions et/ou de configurations différentes.

14. Système de transmission à enroulement comprenant un moyen de transmission d'entraînement flexible, tel qu'une chaîne ou une courroie, au moins deux roues de transmission en relation interactive avec le moyen de transmission d'entraînement, et un dispositif tendeur (1) selon l'une des revendications 1 à 12.

15. Série de systèmes de transmission à enroulement comprenant au moins un premier système de transmission à enroulement et au moins un deuxième système de transmission à enroulement, le premier système de transmission à enroulement présentant un premier dispositif tendeur d'une série de dispositifs tendeurs selon la revendication 13, et le deuxième système de transmission à enroulement présentant un deuxième dispositif tendeur d'une série de dispositifs tendeurs selon la revendication 13.
